# EUROPÄISCHE PATENTSCHRIFT

(11) **EP 2 552 755 B1**
(45) Veröffentlichungstag und Bekanntmachung des Hinweises auf die Patenterteilung: **29.11.2017**
(21) Anmeldenummer: 11702015.6
(22) Anmeldetag: 31.01.2011
(51) Int. Cl.: B60S 1/40, B60S 1/38

(54) **ANSCHLUSSVORRICHTUNG ZUM GELENKIGEN VERBINDEN EINES WISCHARMS MIT EINEM WISCHBLATT**
CONNECTION DEVICE FOR THE ARTICULATED CONNECTION OF A WIPER ARM TO A WIPER BLADE
DISPOSITIF D'ACCOUPLEMENT POUR L'ASSEMBLAGE ARTICULÉ D'UN BRAS D'ESSUIE-GLACE AVEC UN BALAI D'ESSUIE-GLACE

(30) Priorität: 29.03.2010 DE 102010003372
(43) Veröffentlichungstag der Anmeldung: 06.02.2013
(73) Patentinhaber: Robert Bosch GmbH, 70442 Stuttgart (DE)
(72) Erfinder: DEPONDT, Helmut, B-3010 Kessel-Lo (BE)
(86) Internationale Anmeldenummer: PCT/EP2011/051286
(87) Internationale Veröffentlichungsnummer: WO 2011/120723

(56) Entgegenhaltungen:
- DE-A1- 10 160 111
- DE-A1- 10 347 637
- DE-A1-102005 020 601
- DE-A1-102005 062 462
- DE-A1-102007 021 333
- DE-A1-102007 022 185
- JP-A- 2003 312 451

## Beschreibung

### Stand der Technik

Die Erfindung geht von einer Anschlussvorrichtung zum gelenkigen Verbinden eines Wischarms mit einem Wischblatt nach dem Oberbegriff des Anspruchs 1 aus.

Aus der DE 20 2005 021 307 U1 ist eine Anschlussvorrichtung zum gelenkigen Verbinden eines Wischblatts in Flachbalkenbauweise bekannt, die für verschiedene Wischarme geeignet ist. Die Anschlussvorrichtung umfasst mindestens ein einteiliges oder mehrteiliges Anschlusselement, das fest, aber lösbar mit einem Tragelement in Form von Federschienen befestigt ist. Zwischen je einem Wischarm und dem Wischblatt ist ein Adapter vorgesehen, der einerseits Anschlussmöglichkeiten für das Anschlusselement und andererseits Anschlussmöglichkeiten für einen der Wischarme bzw. für entsprechende Verbindungselemente besitzt, die mit dem jeweiligen Wischarm fest verbunden oder an diesem angeformt sind. Ein Gelenk, dessen Gelenkachse sich quer zur Längsrichtung des Wischblatts erstreckt, ist zwischen einem der Verbindungselemente und einem Adapter angeordnet, der drehfest mit dem Anschlusselement verbunden ist, oder alternativ zwischen einem mit dem Anschlusselement drehfest verbundenen Teil des Adapters und einem mit dem Verbindungselement drehfest verbundenen Teil des Adapters. Somit ergeben sich für drei verschiedene Verbindungselemente der Wischarme drei verschiedene Adapter.

Die Anschlussvorrichtung eignet sich für einen Wischarm mit einem hakenförmigen Ende bzw. Verbindungselement oder einem Ende bzw. Verbindungselement mit einem seitlichen Lagerstift und einer Brücke entsprechend einem bekannten Sidelockprinzip oder einem Wischarm mit einem Ende bzw. Verbindungselement, bei dem der Wischarm im Wesentlichen gradlinig oberhalb des Wischblatts verläuft und nach dem Toplock-Prinzip mit dem Anschlusselement verbunden ist.

Eine andere Anschlussvorrichtung zum gelenkigen Verbinden eines Wischblatts mit einem Wischarm ist aus der DE 103 47 637 A1 bekannt. Hierbei besitzt ein Anschlusselement in Form einer Blechkralle einen mittleren Längssteg, der vom Tragelement des Wischblatts weg weist, und in den eine quer verlaufende Schwenkachse drehfest eingesetzt ist. Auf der zu beiden Seiten des Längsstegs frei tragend vorstehenden Schwenkachse ist ein Adapter mit Lageröffnungen schwenkbar gelagert, die in seitlichen Federzungen angeordnet sind. Der Adapter, der aus Kunststoff gefertigt ist, umfasst die Blechkralle von außen und wird mittels Rastelementen und Halteelementen in ein zum Wischblatt hin offenes Verbindungselement eingeklippst, das fest mit dem Wischarm verbunden ist. Der Adapter ist zum einen durch innere Führungsstege seitlich auf dem Längssteg der Blechkralle geführt und zum anderen an seinen Seitenwänden spielfrei im Verbindungselement eingesetzt. Hierzu dient eine Taste, die am Ende einer Federzunge in einer Deckwand des Adapters vorgesehen ist und im montierten Zustand in ein passendes Rastloch einer Deckwand des Verbindungselements einrastet.

Aus der DE 10 2007 022 185 A1 ist ein Wischblatt mit einer Vorrichtung zum gelenkigen Verbinden mit einem Wischarm bekannt. Die Vorrichtung umfasst ein Anschlusselement, dessen zwei in Längsrichtung des Wischblatts verlaufende Seitenwände durch einen Lagerstift miteinander verbunden sind. Das Anschlusselement ist an einem Tragelement befestigt, das in bzw. an einer Wischleiste vorgesehen ist, die von dem Wischarm über eine Fahrzeugscheibe geführt wird. Der Lagerstift ist in der Nähe eines zum äußeren Kreis der Wischbewegung weisenden Endes des Anschlusselements angeordnet. Auf dem Lagerstift ist mit einer offenen Nabe ein Adapter schwenkbar gelagert, der mit dem Wischarm fest, aber lösbar verbunden ist.

### Offenbarung der Erfindung

Nach der Erfindung ist ein Lagersteg an einer Längsseite eines Bodens nur in einem kurzen Bereich am Ende des Anschlusselements angeformt. Hierdurch benötigt das Gelenk zwischen dem Anschlusselement und dem Adapter nur wenig Bauraum insbesondere Baulänge, sodass der übrige Bauraum innen und außen für Rast- und Haltemittel verwendet werden kann, die für die Verbindung des Adapters mit einer großen Anzahl unterschiedlicher Wischarme erforderlich sind. Dabei ist es wichtig, dass eine gewisse standardisierte Gelenkverbindung zwischen dem Anschlusselement und dem Adapter unabhängig von der Art des Wischarms gegeben ist. Ferner soll die Anschlussvorrichtung eine gute Seitenführung des Wischblatts gewährleisten, indem sie durch eine große Abstützbasis in der Lage ist, große Drehmomente um eine Hochachse und hohe Querkräfte aufzunehmen. Erfindungsgemäß weist das Anschlusselement in Längsrichtung versetzt zum Lagersteg an der gleichen Längsseite einen Längssteg auf, der relativ zum Lagersteg soweit nach außen versetzt verläuft, dass in montiertem Zustand die Außenseite des Längsstegs an der Innenseite der Seitenwand des Adapters geführt ist, während die Innenseite des Lagerstegs an der ihm zugewandten Seite eines Lagerblocks des Adapters geführt ist. Die Montage erfolgt, indem der Adapter in üblicher Weise z.B. um 90 Grad zur Längsrichtung des Anschlusselements gedreht wird. In dieser Position kann die Innenseite einer Seitenwand des Adapters an der Außenseite des Lagerstegs entlang gleiten, wobei ein Lagerpin, quer zur Längsrichtung im Lagersteg gehalten ist und an einem nach außen weisenden, vorzugsweise kürzeren Teil von einer Lagerkulisse in der Seitenwand des Adapters aufgenommen wird, während das andere längere Ende des Lagerpins in Längsrichtung des Wischblatts in eine offene Nabe des Lagerblocks geschoben werden kann. In der Endposition befindet sich der Lagersteg in einem Zwischenraum zwischen dem Lagerblock und der gegenüberliegenden Seitenwand des Adapters. Der Zwischenraum ist so bemessen, dass der Adapter in der Endposition in Längsrichtung des Lagerpins auf den Lagersteg zu verschoben werden kann, sodass der Lagerpin dabei in eine Lagerbohrung des Lagerblocks eindringt, die sich an die offene Nabe anschließt. Wenn nun die Innenseite des Lagerstegs an der Stirnseite des Lagerblocks anliegt, kann der Adapter in seine parallel zum Wischarm verlaufende Ausgangs- und Betriebslage zurückgeschwenkt werden, wobei der nach außen versetzte Längssteg mit seiner Außenseite an der Innenseite der Seitenwand des Adapters entlang gleitet. Somit ist der Adapter und damit der Wischarm gegenüber dem Anschlusselement und damit relativ zum Wischblatt mit einem geringen Spiel seitlich geführt, wobei der seitliche Versatz zwischen der Innenseite des Lagerstegs und der Außenseite des Längsstegs auf die Breite des Zwischenraums zwischen dem Lagerblock der Innenseite der Seitenwand des Adapters abgestimmt ist.

Bei diesem Ausführungsbeispiel ist es zweckmäßig, dass sich der Lagerpin zu beiden Seiten des Lagerstegs erstreckt und der nach innen weisende Teil des Lagerpins länger ist als der nach außen weisende Teil des Lagerpins. Da die offene Nabe mit der sich daran anschließenden Lagerbohrung mehr als die Hälfte der Breite des Adapters einnimmt, ergibt sich eine gute Lagerung des Adapters auf dem Lagerpin.

Gemäß einer Ausgestaltung, die nicht im Rahmen der Erfindung liegt, weist das Anschlusselement einen an dem Lagersteg montierten, nach innen gerichteten, frei tragenden Lagerpin auf, während an dem anderen Ende des Bodens diametral zum Lagersteg eine Führungswand mit einer Führungsachse angeformt ist, wobei die Führungswand und die Führungsachse die gleichen Abmessungen haben wie der Lagersteg und der Lagerpin. Somit ergibt sich eine große Abstürzbasis, die besonders gut zur Aufnahme von Drehmomenten um eine Hochachse geeignet ist. Außerdem ermöglichen die gleichen Abmessungen, dass das gleiche Anschlusselement für die Montage eines linkshändigen oder rechtshändigen Wischarms geeignet ist.

Der hierzu passende Adapter besitzt eine Nabe zur Aufnahme des Lagerpins und an seinem anderen Ende einen Führungsblock mit einer Lagerkulisse zur Aufnahme der Führungsachse. Um die Nabe stirnseitig über den Lagerpin zu schieben, ist es vorteilhaft, dass die Nabe in einem Frontteil des Adapters angeordnet ist, wobei das Frontteil eine Klappe besitzt, durch die die Nabe im geöffneten Zustand der Klappe von der Stirnseite zugänglich ist. Die Klappe ist zweckmäßigerweise rechtwinklig und bildet mit einem Teil einen Teil der Deckwand und mit einem anderen einen Teil einer Seitenwand des Adapters. Sie ist mit einer Seitenkante des Deckwandteils z.B. über ein Filmscharnier mit der anderen Seitenwand des Adapters gelenkig verbunden. Im geschlossenen Zustand übergreift die Klappe mit dem Seitenwandteil den Lagersteg, sodass der Adapter in Richtung des Lagerpins einerseits mit der Stirnseite der Nabe und andererseits mit der Innenseite der Klappe an dem Lagersteg gesichert ist.

Gemäß einer Ausgestaltung, die nicht im Rahmen der Erfindung liegt, besitzt der Adapter an dem der Nabe entgegengesetzten Ende einen Führungsblock mit einer Lagerkulisse zur Aufnahme der Führungsachse. In der Betriebsstellung des Adapters greift die Führungsachse in die Lagerkulisse des Führungsblocks, wobei die zum einwandfreien Betrieb notwendige Schwenkbewegung des Adapters gewährleistet bleibt. Während dieser Schwenkbewegung ist der Adapter an der Führungswand seitlich geführt, die in einem passenden Zwischenraum zwischen der Innenseite der benachbarten Seitenwand des Adapters und dem Führungsblock eintaucht.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Teilansicht eines Wischblatts mit einem Anschlusselement einer erfindungsgemäßen Anschlussvorrichtung für eine rechtshändige Anordnung eines Wischarms,
- Fig. 2: eine perspektivische Teilansicht eines Wischblatts mit einem Anschlusselement einer erfindungsgemäßen Anschlussvorrichtung für eine linkshändige Anordnung eines Wischarms,

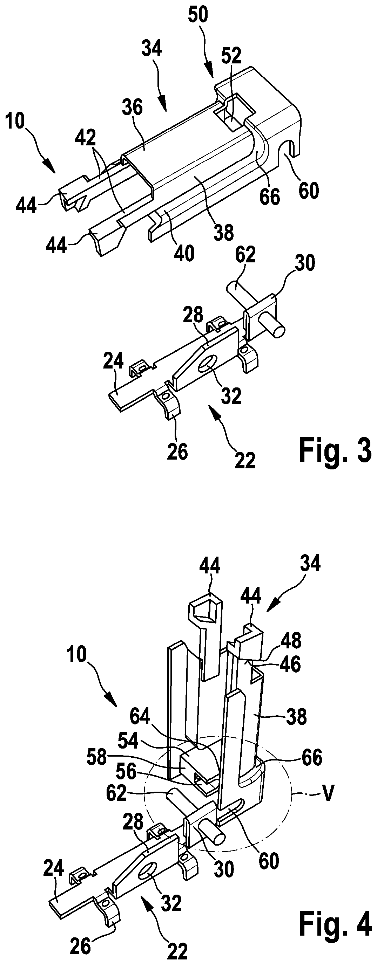

- Fig. 3: eine Explosionsansicht einer erfindungsgemäßen Anschlussvorrichtung,
- Fig. 4: eine Montageansicht einer erfindungsgemäßen Anschlussvorrichtung,

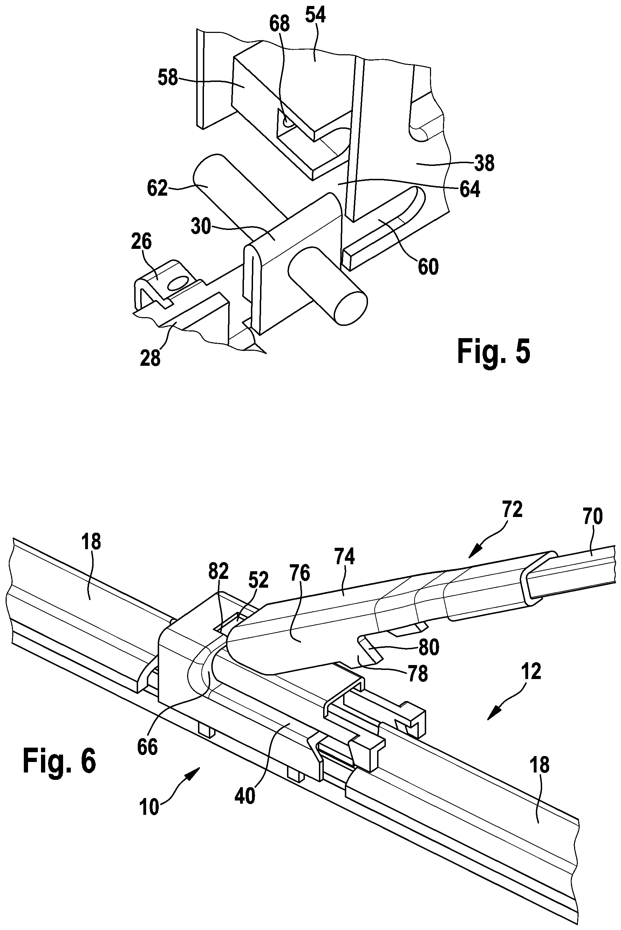

- Fig. 5: ein vergrößertes Detail entsprechend der Linie V in Fig. 4,
- Fig. 6: eine perspektivische Teilansicht eines Wischblatts mit einer erfindungsgemäßen Anschlussvorrichtung und einem Wischarm,
- Fig. 7: bis 9 eine Variante zu Fig. 3, Fig. 4 und Fig. 6,
- Fig. 10: eine Röntgenansicht durch einen Adapter mit einem Wischarm nach Fig. 9,
- Fig. 11: bis Fig. 13 eine Variante zu Fig. 7 bis 9,
- Fig. 14: bis 16 eine Variante zu Fig. 7 bis 9,
- Fig. 17: eine Variante eines Anschlusselements mit einem Adapter nach Fig. 3,
- Fig. 18: ein Anschlusselement mit einem montierten Adapter nach Fig. 17,
- Fig. 19: eine vergrößerte perspektivische Teilansicht eines Anschlusselements und eines Adapters nach Fig. 17 während der Montage für eine linkshändige Anordnung des Wischarms,
- Fig. 20: eine perspektivische Teilansicht eines Wischblatts mit einer Anschlussvorrichtung nach Fig. 19,
- Fig. 21: eine Ansicht entsprechend des Pfeils XXI in Fig. 18,
- Fig. 22: eine perspektivische Teilansicht eines Wischblatts mit einer Anschlussvorrichtung nach Fig. 18 während der Montage und
- Fig. 23: eine perspektivische Teilansicht eines Wischblatts mit einer Anschlussvorrichtung nach Fig. 18 während der Montage eines Wischarms in rechtshändiger Anordnung.

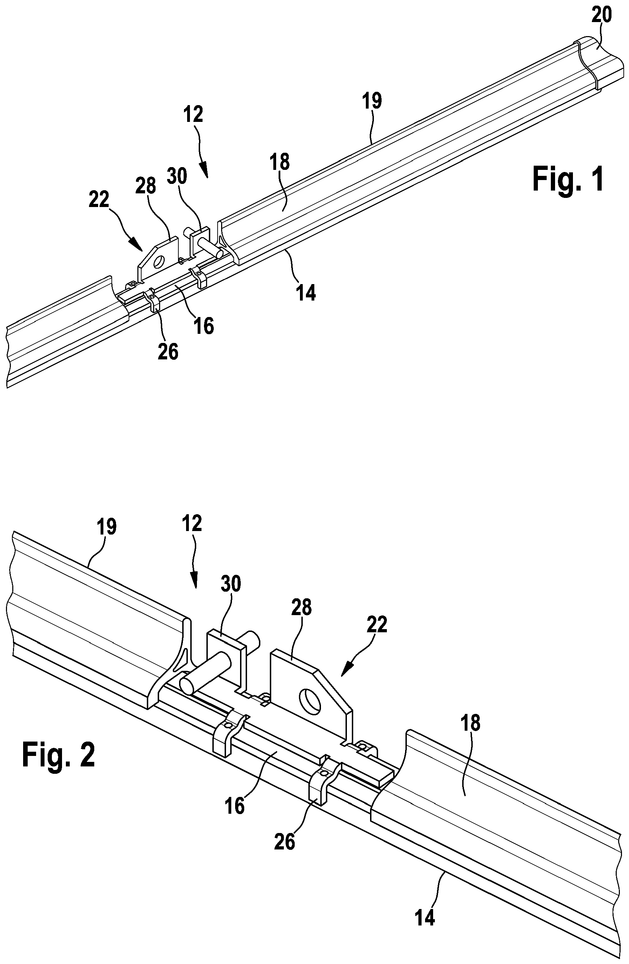

Ein in Fig. 1 dargestelltes Wischblatt 12 besitzt eine Wischleiste 14, die durch ein Tragelement 16 z.B. in Form zweier parallel verlaufender Federschienen gehalten wird. Auf dem Tragelement 16 ist im mittleren Bereich des Wischblatts 12 ein Anschlusselement 22 in Form einer Blechkralle befestigt, insbesondere angeschweißt. Das Anschlusselement 22 besitzt einen Boden 24, an dem an jeder Längsseite zwei Klauen 26 angeformt sind, die zum Tragelement 16 weisen und so gekröpft sind, dass sie sich an der Oberseite des Tragelements 16 abstützen und einen Freiraum für eine nicht dargestellte Kopfleiste der Wischleiste 14 bilden.

Zwischen den Klauen 26 ist an einer Längsseite des Bodens 24 ein Längssteg 28 abgewinkelt, der in die entgegengesetzte Richtung der Klauen 26 weist und eine Bohrung 32 hat. An der gleichen Seite des Bodens 24 ist zum äußeren Ende des Wischblatts 12 hin versetzt ein Lagersteg 30 in der gleichen Richtung abgewinkelt wie der Längssteg 28, jedoch ein wenig seitlich nach innen versetzt. Ein Lagerpin 62 ist in dem Lagersteg 30 eingesetzt und steht zu beiden Seiten des Lagerstegs 30 vor, wobei der nach innen weisende Teil des Lagerpins 62 länger ist als der nach außen weisende Teil des Lagerpins 62. Im Bereich des Lagerpins 62 ist die Materialstärke des Lagerstegs 30 dadurch vergrößert, dass er um 180° gefaltet ist. Zu beiden Seiten des Anschlusselements 22 sind zwei Spoilerteile 18 auf dem Tragelement 16 angeordnet, deren Kämme 19 auf der Seite des Längsstegs 28 und des Lagerstegs 30 liegen. An den Enden des Wischblatts 12 sind Endkappen 20 montiert, die die Profile der Spoilerteile 18 an den Enden abschließen.

Je nach dem, ob der Wischarm in Richtung auf das äußere Ende des Wischblatts 12 gesehen rechts oder links vom Spoilerkamm 19 verläuft, spricht man von einer rechtshändigen bzw. linkshändigen Anordnung des Wischarms. In diesem Sinne zeigt Fig. 1 ein Anschlusselement 22 für eine rechtshändige Anordnung, während Fig. 2 ein Anschlusselement 22 für eine linkshändige Anordnung des Wischarms zeigt.

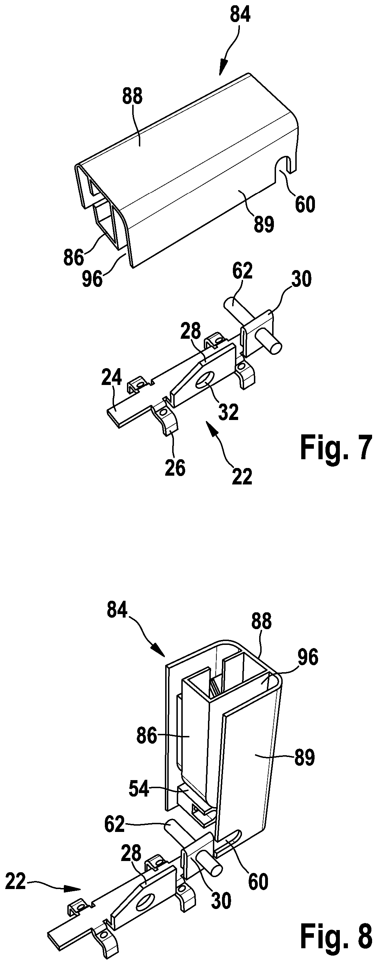

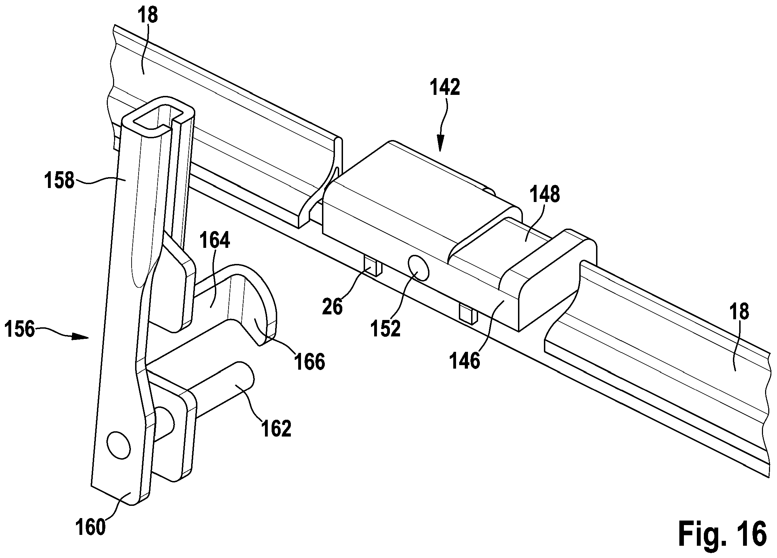

Eine erfindungsgemäße Anschlussvorrichtung 10 umfasst das Anschlusselement 22 und einen Adapter 34, wobei der Adapter 34 verschiedene Ausführungen haben kann, wie sie in den Fig. 7 bis 16 dargestellt sind. Allen Adaptern in den Ausführungen 34, 84, 106, 142 ist gemeinsam, dass sie an ihrem zum äußeren Ende des Wischblatts 12 weisenden Ende einen Lagerblock 54 besitzen, der an der Innenseite einer Seitenwand 38 angeformt ist und zur Innenseite der gegenüberliegenden Seitenwand 38 einen Zwischenraum 64 bildet. Angrenzend an den Zwischenraum weist der Lagerblock 54 eine im montierten Zustand zum Boden 24 des Anschlusselements 22 offene Nabe 56 auf, die in einen geschlossenen Teil 58 mit einer Lagerbohrung 68 übergeht. Die beiden Seitenwände 38 sind durch eine Deckwand 36 miteinander verbunden.

Zur Montage wird z.B. der Adapter 34 um etwa 90° in Richtung auf das äußere Ende des Wischblatts 12 gedreht, sodass er auf den Lagersteg 30 aufgeschoben werden kann. Dabei dringt der Lagersteg 30 an der Innenseite einer Seitenwand 38 des Adapters 34 gleitend in den Zwischenraum 64, während der Lagerpin 62 mit seinem nach außen weisenden, kürzeren Teil in eine zum Anschlusselement 22 hin offene Lagerkulisse 60 und mit seinem nach innen weisenden, längeren Teil in die offene Nabe 56 eintaucht. Am Ende der Lagerkulisse 60 kann der Adapter 34 innerhalb des Zwischenraums 64 in Richtung des nach außen weisenden Teils des Lagerpins 62 verschoben werden, wobei der nach innen weisende Teil des Lagerpins 62 in die Lagerbohrung 68 eindringt, bis schließlich die Innenseite des Lagerstegs 30 an der gegenüberliegenden Stirnseite des Lagerblocks 54 anliegt, während die äußere Stirnseite des Lagerpins 62 in der Lagerkulisse 60 etwa bündig mit der Außenkontur des Adapters 34 abschließt. Wird dieser nun in die Betriebslage etwa parallel zum Wischblatt 12 geschwenkt, gleitet der Längssteg 28 mit seiner Außenseite an der Innenseite der Seitenwand 38 des Adapters 34 entlang, sodass das Anschlusselement 22 und damit das Wischblatt 12 seitlich annähernd spielfrei zwischen dem Lagerblock 54 und der Seitenwand 38 des Adapters 34 geführt ist.

Der Adapter 34 besitzt Haltemittel in Form zweier an den Seitenwänden 38 außen verlaufender Führungsprofile 40, die in einen Vorsprung 66 übergehen und eine Halteöffnung 52 sowie Rastelemente in Form zweier Federstege 42, die an der antriebsseitigen Stirnseite der Seitenwände 38 angeformt sind und nach außen weisende Rastnocken 44 besitzen. Zur Montage eines Wischarms 70 mit einem Verbindungselement 72 wird dieses mit seinen Seitenwänden 76 über die Seitenwände 38 des Adapters 34 geschoben, während eine die beiden Seitenwände 76 miteinander verbindende Deckwand 74 des Verbindungselements 72 mit einer nicht sichtbaren Lasche in die Halteöffnung 52 eingreift. Wird der Wischarm 70 nun in die Betriebsposition etwa parallel zum Wischblatt 12 geschwenkt, stützt sich die Stirnkante 82 des Verbindungselements 72 an dem Vorsprung 66 ab, der als Anschlag dient, während die Unterkante der Seitenwände 76 auf den Führungsprofilen 40 aufliegt. Beim Erreichen der Endposition rasten die Rastnocken 44 in Hinterschneidungen 80 ein, die durch Vorsprünge 78 an den Seitenwänden 76 des Verbindungselements 72 gebildet werden. Dabei kommen die Ränder der Hinterschneidung 80 an den Anschlagschrägen 46 der Rastnocken 44 zur Anlage. Die Rastnocken 44 besitzen angrenzend an die Anschlagschrägen 46 Anschläge 48, die etwa senkrecht zur Längsrichtung des Adapters 34 verlaufen. Sie bieten weitere Möglichkeiten zum Verrasten mit entsprechenden Verbindungselementen anderer Wischarme.

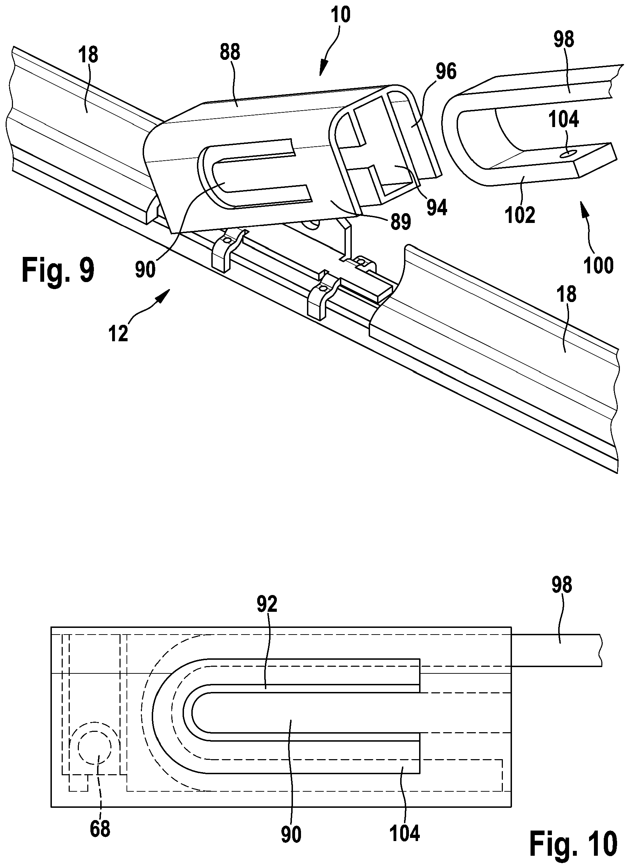

Die in Fig. 7 bis in Fig. 10 dargestellte Anschlussvorrichtung 10 umfasst neben dem Anschlusselement 22 einen Adapter 84 für den Anschluss eines Wischarms 98 mit einem hakenförmigen Ende 100. Dieses hat auf der Seite zum Anschlusselement 22 hin einen zum Wischarm 98 etwa parallel verlaufenden, kurzen Schenkel 102 mit einem Rastloch 104. Der Adapter 84 besitzt ein im Wesentlichen u-förmiges Querschnittprofil, das von Seitenwänden 89 und einer diese miteinander verbindenden Deckwand 88 gebildet wird. In dem zum äußeren Ende des Wischblatts 12 weisenden Frontteil 50 befindet sich der Lagerblock 54 mit der offenen Nabe 56. Ferner ist in der dem Lagerblock 54 gegenüberliegenden Seitenwand 89 eine zur offenen Nabe 56 fluchtende Lagerkulisse 60 vorgesehen.

Durch einen Zwischenraum 96 von der Seitenwand 89 des Adapters 84 getrennt, befindet sich ein mit der Deckwand 88 verbundener Führungsblock 86, dessen Innenraum 94 das hakenförmige Ende 100 des Wischarms 98 aufnimmt. Die Breite des Zwischenraums 96 ist auf den seitlichen Versatz zwischen dem Längssteg 28 und dem Lagersteg 30 abgestimmt. Bei der Montage des hakenförmigen Endes 100 in Längsrichtung des Adapters 84 rastet in der Endposition eine Federzunge 90 mit einem nach innen gerichteten Aufnahmeprofil 92 in den Freiraum zwischen dem kurzen Schenkel 102 und dem Wischarm 98 ein. Somit ist das hakenförmige Ende 100 sowohl in Längsrichtung gesichert als auch durch die Innenwände des Innenraums 94 seitlich geführt.

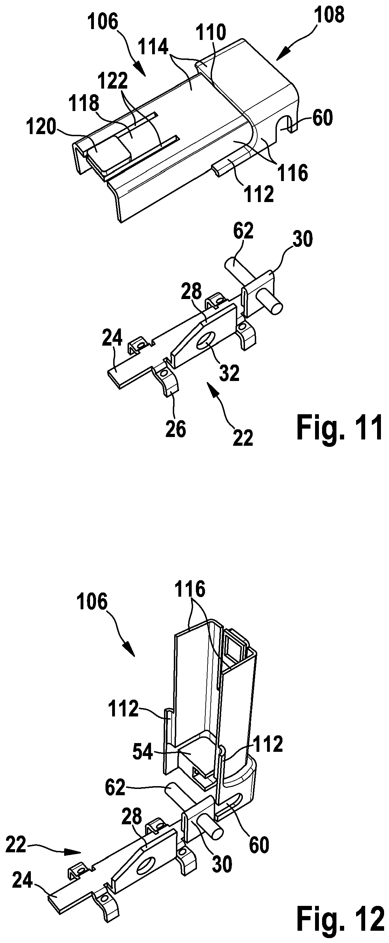

Eine weitere Ausführung der erfindungsgemäßen Anschlussvorrichtung zeigen die Fig. 11 bis Fig. 13. Sie umfasst das Anschlusselement 22 und einen Adapter 106, bei dem in einem Frontteil 108 der Lagerblock 54 mit der offenen Nabe 56 untergebracht ist. In einer Seitenwand 116 des Frontteils 108 ist die Lagerkulisse 60 fluchtend zur offenen Nabe 56 vorgesehen. Der Adapter 106 wird seitlich wie bei den vorhergehenden Ausführungsbeispielen durch den Lagersteg 30 und den Längssteg 28 annähernd spielfrei geführt.

Der sich durch einen Absatz 110 an den Frontteil 108 anschließende weitere Teil des Adapters 106 besitzt ebenfalls eine die beiden Seitenwände 116 miteinander verbindende Deckwand 114. In diese ist durch zwei Schlitze 122 eine Federzunge 118 gebildet, die zum inneren Ende des Wischblatts 12 weist und an ihrem freien Ende eine nach außen weisende Taste 120 besitzt.

Ein passendes Verbindungselement 124, das über ein Anschlussprofil 126 mit einem Wischarm verbunden ist, wird vom inneren Ende des Wischblatts 12 auf den Adapter 106 geschoben, wobei die Federzunge 118 mit der Taste 120 von einer Deckwand 130 eines Führungsprofils 128 nach innen gedrückt wird, während Führungsrippen 134 an den Seitenwänden 132 des Führungsprofils 128 unter die freien Kanten der Seitenwände 116 des Adapters 106 greifen. In der Endposition liegt die Stirnkante 138 des Führungsprofils 128 an dem Absatz 110 des Adapters 106 an, wobei sich an den Absatz 110 in Längsrichtung anschließende Führungsränder 112 in Aussparungen 136 an den Seitenwänden 132 des Führungsprofils 128 einfügen und die Taste 120 in ein Rastloch in der Deckwand 130 des Führungsprofils 128 einrastet.

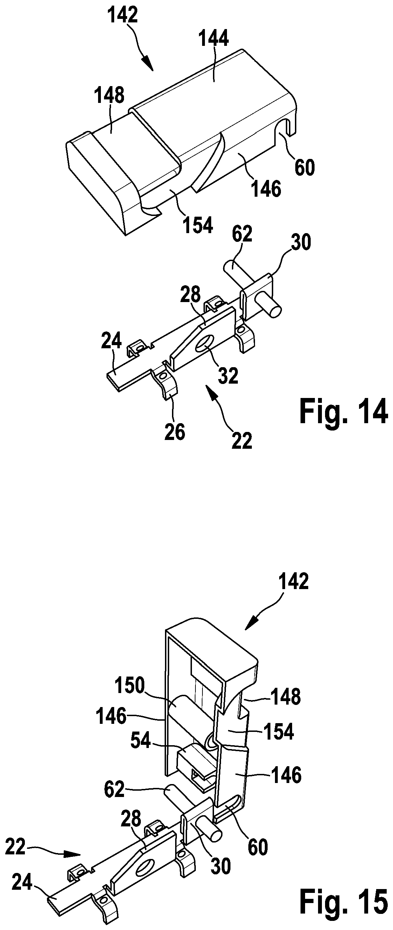

In Fig. 14 bis Fig. 16 ist eine Variante dargestellt, bei der der Wischarm bzw. sein Verbindungselement 156 nach dem Sidelock-Prinzip mit dem Wischblatt 12 verbunden ist. Der hierfür vorgesehene Adapter 142 besitzt ein im Querschnitt u-förmiges Profil, das durch zwei Seitenwände 146 und eine Deckwand 144 gebildet wird. Wie bei den übrigen Ausführungsbeispielen ist in dem Frontteil, das zum äußeren Ende des Wischblatts 12 weist, ein Führungsblock 54 mit einer offenen Nabe 56 und einer Lagerbohrung 68 vorgesehen, die an einer Seitenwand 146 angeformt ist, während zur anderen Seitenwand 146, in der eine Lagerkulisse 60 vorgesehen ist, ein Zwischenraum 64 für den Lagersteg 30 freigelassen ist. In der Seitenwand 146, an der der Lagerblock 54 angeformt ist, befindet sich eine Öffnung 152, an die sich nach innen eine Aufnahmehülse 150 anschließt. Zum inneren Ende des Wischblatts 12 versetzt ist eine quer zur Längsrichtung verlaufende Vertiefung 148 vorgesehen, die auf der der Öffnung 152 abgewandten Seitenwand 146 in eine Nische 154 mündet.

Das Verbindungselement 156 besitzt ein Anschlussprofil 158 für einen nicht dargestellten Wischarm. In einem im Querschnitt u-förmigen Halteprofil 160 am anderen Ende des Verbindungselements 156 ist in den Schenkel ein Stift 162 eingenietet. Der Stift verläuft quer zur Längsrichtung und wird bei der Montage in die Öffnung 152 und die sich anschließende Aufnahmehülse 150 eingeführt, während das Verbindungselement 156 sich in einer Montage etwa 90° zur Längsrichtung des Wischblatts 12 befindet. Wird das Verbindungselement 156 danach in eine Betriebsstellung etwa parallel zum Wischblatt 12 geschwenkt, greift eine Brücke 164 über den Adapter 142 und rastet mit ihrem abgewinkelten Ende 166 in die Nische 154. Das abgewinkelte Ende 166 bildet mit der Brücke 164 einen geringfügig kleineren Winkel als 90°, sodass er in der Nische 154 einrastet. In der eingerasteten Stellung liegt die Brücke 164 in der Vertiefung 148. In der Betriebsstellung ist das Verbindungselement 156 in der Lage, mit dem Adapter 142 eine Schwenkbewegung relativ zum Anschlusselement 22 auszuführen.

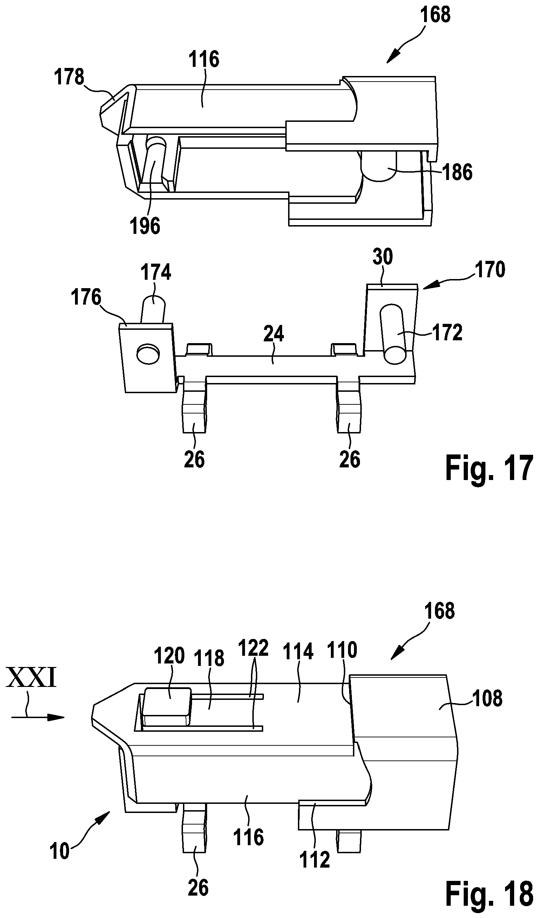

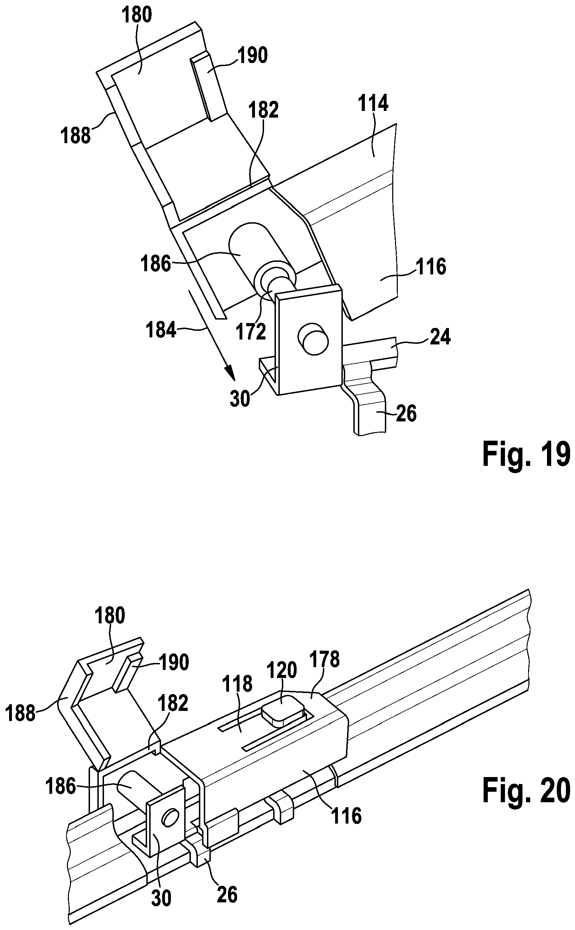

In Fig. 17 bis Fig. 23 ist ein weiteres Ausführungsbeispiel einer Anschiussvorrichtung 10 dargestellt. Die Anschlussvorrichtung 10 umfasst ein Anschlusselement 170 und einen Adapter 168. Das Anschlusselement 170 ist als Blechkralle ausgebildet und besitzt wie das Anschlusselement 22 einen Boden 24 mit seitlich angeordneten Klauen 26. An einem Ende des Bodens 24 ist ein ähnlicher Lagersteg 30 angeformt wie an dem Anschlusselement 22. Dieser trägt einen nach innen gerichteten, frei tragenden Lagerpin 172. Am entgegengesetzten Ende des Bodens 24 ist eine Führungswand 176 angeordnet, die diametral zum Lagersteg 30 liegt und eine nach innen gerichtete, freitragende Führungsachse 174 trägt. Die Führungswand 176 und die Führungsachse 174 haben die gleiche Abmessungen wie der Lagersteg 30 und der Lagerpin 172, sodass sie je nach Bedarf für eine rechtshändige oder linkshändige Montage des Adapters 168 geeignet sind, wobei bei einem Wechsel der Wischarmanordnung die Funktion zwischen Lagersteg 30 und Führungswand 176 wechselt, sodass der frühere Lagersteg 30 nach dem Wechsel die Funktion der früheren Führungswand 176 wahrnimmt.

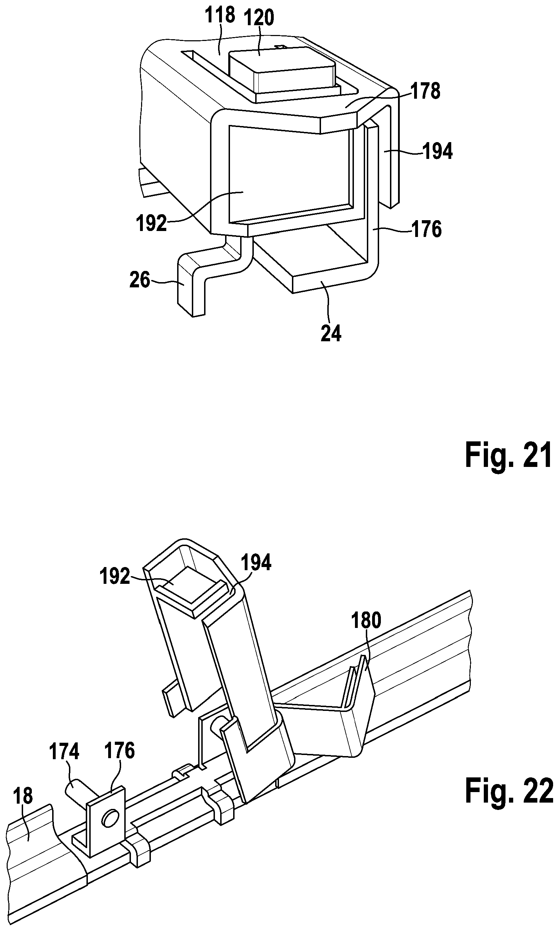

Der Adapter 168 besitzt ein im Wesentlichen u-fömiges, durch eine Deckwand 114 und zwei Seitenwände 116 gebildetes Profil, das einen Frontteil 108 besitzt, in dem eine Nabe 186 zur Aufnahme des Lagerpins 172 untergebracht ist. Die Nabe 186 ist mit einer Stirnseite an einer Innenseite einer Seitenwand 116 des Adapters 168 angeformt, während die anderer Stirnseite offen ist. Die offene Seite wird von einer Klappe 180 überdeckt, die mit der Seitenwand 116 an der geschlossenen Seite der Nabe 186 durch ein Filmscharnier 182 verbunden ist. Mit geöffneter Klappe 180 kann der Adapter 168 in Richtung der Pfeile 184 auf den Lagerpin 172 geschoben werden. Bei einem Schließen der Klappe 180 übergreift diese den Lagersteg 30 und stützt sich vorzugsweise über einen Bord 190 an der Außenseite des Lagerstegs 30 ab, während sich die Stirnseite der Nabe 186 in Richtung der Pfeile 184 an der Innenseite des Lagerstegs 30 abstützt. Zum äußeren Ende des Wischblatts 12 hin besitzt die Klappe 180 eine rudimentäre Stirnwand 188. Durch diese und durch die seitliche Führung des Adapters 168 am Lagersteg 30 darf die Schwenkbarkeit des Adapters 168 nicht beeinträchtigt werden. Am anderen Ende besitzt der Adapter 168 einen Führungsblock 192 mit einer zum Anschlusselement 170 hin offenen Kulisse 196. Der Führungsblock 192 bildet mit einer Seitenwand 116 einen Zwischenraum 194. Wenn der Adapter 168 mit seiner Nabe 186 auf dem Lagerpin 172 in Richtung der Pfeile 184 aufgeschoben ist (Fig. 22) wird er in die Betriebsposition etwa parallel zum Wischblatt 12 geschwenkt. Dabei taucht die Führungswand 176 in den Zwischenraum 194, während die Führungsachse 174 in die Kulisse 196 eintaucht, sodass der Adapter 168 an diesem Ende seitlich sicher geführt ist.

Die Außenkontur des Adapters 168 ähnelt der Außenkontur des Adapters 106. Der Frontteil 108 ist gegenüber dem übrigen Teil des Adapters 168 durch einen Absatz 110 getrennt, der seitlich in längs verlaufende Führungsränder 112 an den Seitenwänden 116 übergeht. In der Deckwand 114 wird durch Schlitze 122 eine Federzunge 118 gebildet, die zum inneren Ende des Wischblatts 12 weist und an ihrem freien Ende eine nach außen weisendeTaste 120 hat. An diesem Ende besitzt die Deckwand 114 eine brückenförmige Verstärkung 178.

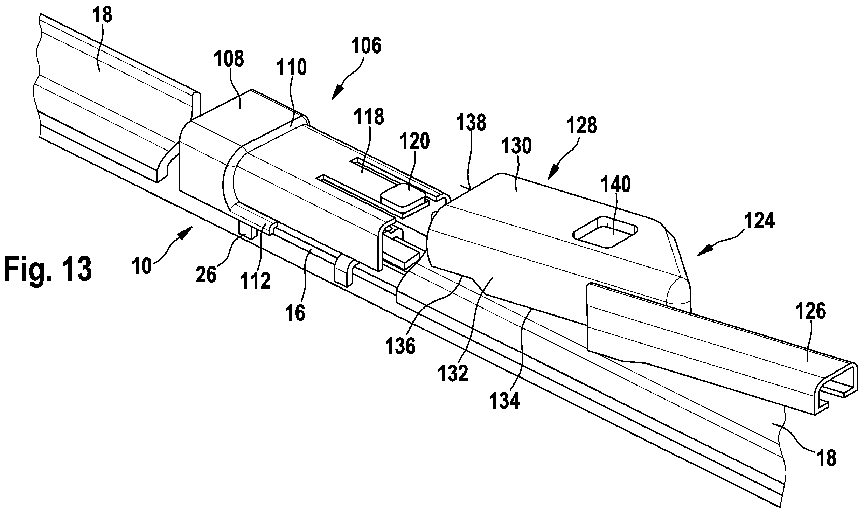

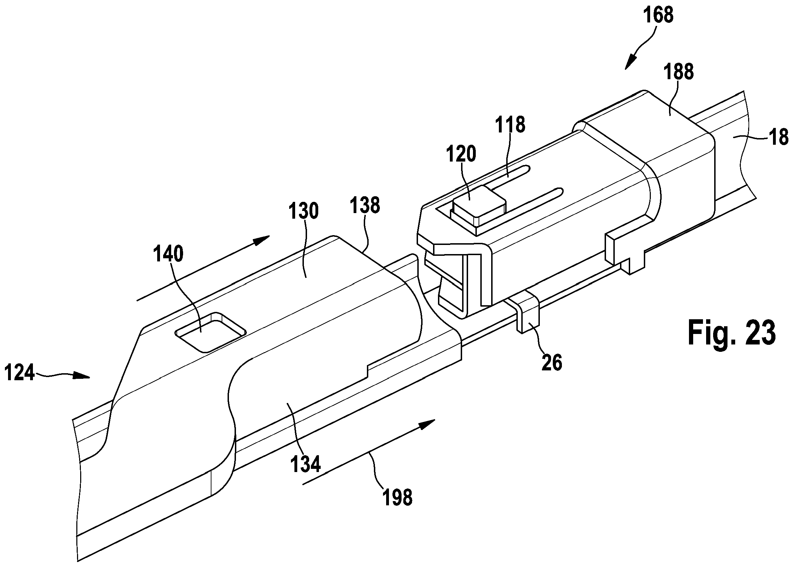

Das Verbindungselement 124 nach Fig. 23 ist im Wesentlichen das gleiche wie das nach Fig. 13. Es wird in Richtung der Pfeile 198 auf den Adapter 168 geschoben, bis die Stirnkante 138 der Deckwand 130 an dem Absatz 110 anliegt.

In dieser Position rastet die Taste 120 am Ende der Federzunge 118 in ein Rastloch 140 der Deckwand 130 ein.

Die wesentlichen Elemente aller Ausführungsformen sind der Lagersteg 30 mit dem Lagerpin 172 und die Führungswand 176 mit der Führungsachse 174 sowie die Nabe 186, die Klappe 180 und der Führungsblock 192 mit der Kulisse 196 und dem Zwischenraum 194. Die übrigen Merkmale des Adapters können je nach Anwendungsfall der Konfiguration des jeweiligen Wischarms bzw. eines Verbindungselements angepasst werden. Auch sind Adapter möglich, die verschiedenartige Haltemittel und Rastmittel in einer Ausführung vereinigen, sodass der gleiche Adapter für mehrere unterschiedliche Wischarme geeignet ist.

## Patentansprüche

1. Anschlussvorrichtung (10) zum gelenkigen Verbinden eines Wischarms (70, 72, 98, 100, 124, 156) mit einem Wischblatt (12), das mit einem Anschlusselement (22, 170) der Anschlussvorrichtung (10) fest verbindbar ist, das mindestens einen in Längsrichtung verlaufenden Lagersteg (30) besitzt, der in das Innere eines Adapters (34, 84, 106, 142, 168) der Anschlussvorrichtung (10) ragt und einen quer zur Längsrichtung verlaufenden Lagerpin (62, 172) trägt, auf dem der Adapter (34, 84, 106, 142, 168) durch Lagermittel (54, 60, 186) schwenkbar gelagert ist, wobei der Adapter (34, 84, 106, 142, 168) Rastmittel (42, 44, 90, 118, 120, 154, 166) und Haltemittel (40, 52, 110, 112, 150, 152, 164, 192, 196) zur lösbaren Verbindung mit dem Wischarm (70, 72, 98, 100, 124, 156) besitzt, **dadurch gekennzeichnet, dass** der Lagersteg (30) an einer Längsseite eines Bodens (24) nur in einem kurzen Bereich am Ende des Anschlusselements (22, 170) angeformt ist und dass das Anschlusselement (22) in Längsrichtung versetzt zum Lagersteg (30) an der gleichen Längsseite einen Längssteg (28) aufweist, der relativ zum Lagersteg (30) so weit nach außen versetzt verläuft, dass im montierten Zustand die Außenseite des Längsstegs (28) an der Innenseite einer Seitenwand (38, 89, 116, 146) des Adapters (34, 84, 106, 142) geführt ist, während die Innenseite des Lagerstegs (30) an der ihm zugewandten Seite eines Lagerblocks (54) des Adapters (34, 84, 106, 142) geführt ist.

2. Anschlussvorrichtung (10) nach Anspruch 1, **dadurch gekennzeichnet, dass** der Lagerpin (62) sich zu beiden Seiten des Lagerstegs (30) erstreckt und der nach innen weisende Teil des Lagerpins (62) länger ist als der nach außen weisende Teil des Lagerpins (62).

3. Anschlussvorrichtung (10) nach Anspruch 2, **dadurch gekennzeichnet, dass** bei der Montage des Adapters (34, 84, 106, 142) in einer um 90 Grad zur Längsrichtung des Wischblatts (12) geschwenkten Position der nach innen weisende Teil des Lagerpins (62) in Längsrichtung des Wischblatts (12) in eine offene Nabe (56) des Lagerblocks (54) geschoben werden kann, während die Außenseite des Lagerstegs (30) an der Innenseite der Seitenwand (38, 89, 116, 146) des Adapters (34, 84, 106, 142) entlang gleitet und der nach außen weisende Teil des Lagerpins (62) in einer offenen Lagerkulisse (60) der Seitenwand (38, 89, 116, 146) geführt ist, bis ein geschlossener Teil (58) der Nabe mit seiner Lagerbohrung (68) auf den Lagerpin (62) geschoben werden kann.

4. Anschlussvorrichtung (10) nach Anspruch 3, **dadurch gekennzeichnet, dass** die Stirnseite des nach außen weisenden Teils des Lagerpins (62) im montierten Zustand mit der Außenkontur des Adapters (34, 84, 106, 142) bündig abschließt.

5. Anschlussvorrichtung (10) nach einem der vorhergehenden Ansprüche, **dadurch gekennzeichnet, dass** die Lagermittel des Adapters (34, 84, 106, 142), nämlich der Lagerblock (54) mit der offenen Nabe (56) sowie mit der Lagerbohrung (68) und die Lagerkulisse (60) in einem zum freien Ende des Wischblatts (12) weisenden Frontteil (50) des Adapters (34, 84, 106, 142) angeordnet sind.

6. Anschlussvorrichtung (10) nach einem der vorhergehenden Ansprüche, **dadurch gekennzeichnet, dass** das Anschlusselement (22, 170) aus Metall als Blechkralle ausgeführt ist, dessen an einem Boden (24) angeformte Klauen (26) mit dem Tragelement (16) in Form mindestens einer Federschiene verschweißt sind.

7. Anschlussvorrichtung (10) nach Anspruch 6, **dadurch gekennzeichnet, dass** die Materialstärke des Lagerstegs (30) im Bereich des Lagerpins (62, 172) durch Umfalten um 180 Grad verstärkt ist.

8. Wischblatt (12) **gekennzeichnet durch** eine mit ihm verbundene Anschlussvorrichtung (10) nach einem der vorhergehenden Ansprüche.

## Claims

1. Connection device (10) for the articulated connection of a wiper arm (70, 72, 98, 100, 124, 156) to a wiper blade (12) which is fixedly connectable to a connection element (22, 170) of the connection device (10), which connection element has at least one bearing web (30) which runs in the longitudinal direction, projects into interior of an adapter (34, 84, 106, 142, 168) of the connection device (10) and bears a bearing pin (62, 172) which runs transversly with respect to the longitudinal direction and on which the adapter (34, 84, 106, 142, 168) is mounted pivotably by means of bearing means (54, 60, 186), wherein the adapter (34, 84, 106, 142, 168) has latching means (42, 44, 90, 118, 120, 154, 166) and holding means (40, 52, 110, 112, 150, 152, 164, 192, 196) for the releasable connection to the wiper arm (70, 72, 98, 100, 124, 156), **characterized in that** the bearing web (30) is integrally formed only in a short region on a longitudinal side of a base (24) on the end of the connection element (22, 170), and **in that** the connection element (22) has, offset in the longitudinal direction with respect to the bearing web (30) on the same longitudinal side, a longitudinal web (28) which runs offset outwards relative to the bearing web (30) to such an extent that, in the fitted state, the outer side of the longitudinal web (28) is guided on the inner side of a side wall (38, 89, 116, 146) of the adapter (34, 84, 106, 142) while the inner side of the bearing web (30) is guided on that side of a bearing block (54) of the adapter (34, 84, 106, 142) which faces said bearing web.

2. Connection device (10) according to Claim 1, **characterized in that** the bearing pin (62) extends on both sides of the bearing web (30), and the inwardly pointing part of the bearing pin (62) is longer than the outwardly pointing part of the bearing pin (62).

3. Connection device (10) according to Claim 2, **characterized in that**, when the adapter (34, 84, 106, 142) is fitted in a position pivoted by 90° with respect to the longitudinal direction of the wiper blade (12), the inwardly pointing part of the bearing pin (62) can be pushed in the longitudinal direction of the wiper blade (12) into an open hub (56) of the bearing block (54) while the outer side of the bearing web (30) slides along the inner side of the side wall (38, 89, 116, 146) of the adapter (34, 84, 106, 142), and the outwardly pointing part of the bearing pin (62) is guided in an open bearing slot (60) of the side wall (38, 89, 116, 146) until a closed part (58) of the hub can be pushed with its bearing bore (68) onto the bearing pin (62).

4. Connection device (10) according to Claim 3, **characterized in that**, in the fitted state, the end side of the outwardly pointing part of the bearing pin (62) ends flush with the outer contour of the adapter (34, 84, 106, 142).

5. Connection device (10) according to one of the preceding claims, **characterized in that** the bearing means of the adapter (34, 84, 106, 142), namely the bearing block (54) with the open hub (56) and with the bearing bore (68), and the bearing slot (60) are arranged in a front part (50) of the adapter (34, 84, 106, 142), said front part pointing to the free end of the wiper blade (12).

6. Connection device (10) according to one of the preceding claims, **characterized in that** the connection element (22, 170) is formed from metal in the form of a sheet-metal claw arrangement, the claws (26) of which, which are integrally formed on a base (24), are welded to the supporting element (16) in the form of at least one spring rail.

7. Connection device (10) according to Claim 6, **characterized in that** the material thickness of the bearing web (30) is reinforced in the region of the bearing pin (62, 172) by folding over by 180°.

8. Wiper blade (12) **characterized by** a connection device (10), which is connected thereto, according to one of the preceding claims.

## Revendications

1. Dispositif de raccordement (10) pour la connexion articulée d'un bras d'essuie-glace (70, 72, 98, 100, 124, 156) à un balai d'essuie-glace (12) qui peut être connecté fixement à un élément de raccordement (22, 170) du dispositif de raccordement (10), qui possède au moins une nervure de palier (30) s'étendant dans la direction longitudinale, qui pénètre à l'intérieur d'un adaptateur (34, 84, 106, 142, 168) du dispositif de raccordement (10) et qui porte une goupille de palier (62, 172) s'étendant transversalement à la direction longitudinale, sur laquelle l'adaptateur (34, 84, 106, 142, 168) est supporté de manière pivotante par des moyens de palier (54, 60, 186), l'adaptateur (34, 84, 106, 142, 168) possédant des moyens d'encliquetage (42, 44, 90, 118, 120, 154, 166) et des moyens de retenue (40, 52, 110, 112, 150, 152, 164, 192, 196) pour la connexion amovible au bras d'essuie-glace (70, 72, 98, 100, 124, 156), **caractérisé en ce que** la nervure de palier (30) est façonnée au niveau d'un côté longitudinal d'un fonds (24) seulement dans une courte région à l'extrémité de l'élément de raccordement (22, 170) et **en ce que** l'élément de raccordement (22) présente une nervure longitudinale (28) décalée dans la direction longitudinale par rapport à la nervure de palier (30) sur le même côté longitudinal, laquelle s'étend de manière décalée vers l'extérieur par rapport à la nervure de palier (30) dans une mesure telle que dans l'état monté, le côté extérieur de la nervure longitudinale (28) soit guidé contre le côté intérieur d'une paroi latérale (38, 89, 116, 146) de l'adaptateur (34, 84, 106, 142), tandis que le côté intérieur de la nervure de palier (30) est guidé contre le côté tourné vers elle d'un bloc palier (54) de l'adaptateur (34, 84, 106, 142).

2. Dispositif de raccordement (10) selon la revendication 1, **caractérisé en ce que** la goupille de palier (62) s'étend des deux côtés de la nervure de palier (30) et la partie de la goupille de palier (62) tournée vers l'intérieur est plus longue que la partie de la goupille de palier (62) tournée vers l'extérieur.

3. Dispositif de raccordement (10) selon la revendication 2, **caractérisé en ce que** lors du montage de l'adaptateur (34, 84, 106, 142) dans une position pivotée à 90 degrés par rapport à la direction longitudinale du balai d'essuie-glace (12), la partie de la goupille de palier (62) tournée vers l'intérieur peut être poussée dans la direction longitudinale du balai d'essuie-glace (12) dans un moyeu ouvert (56) du bloc palier (54), tandis que le côté extérieur de la nervure de palier (30) glisse le long du côté intérieur de la paroi latérale (38, 89, 116, 146) de l'adaptateur (34, 84, 106, 142) et la partie de la goupille de palier (62) tournée vers l'extérieur est guidée dans une coulisse de palier ouverte (60) de la paroi latérale (38, 89, 116, 146) jusqu'à ce qu'une partie fermée (58) du moyeu puisse être poussée avec son alésage de palier (68) sur la goupille de palier (62).

4. Dispositif de raccordement (10) selon la revendication 3, **caractérisé en ce que** le côté frontal de la partie de la goupille de palier (62) tournée vers l'extérieur se termine, dans l'état monté, en affleurement avec le contour extérieur de l'adaptateur (34, 84, 106, 142).

5. Dispositif de raccordement (10) selon l'une quelconque des revendications précédentes, **caractérisé en ce que** les moyens de palier de l'adaptateur (34, 84, 106, 142), à savoir le bloc palier (54) avec le moyeu ouvert (56) ainsi qu'avec l'alésage de palier (68) et la coulisse de palier (60) sont disposés dans une partie frontale (50) de l'adaptateur (34, 84, 106, 142) tournée vers l'extrémité libre du balai d'essuie-glace (12).

6. Dispositif de raccordement (10) selon l'une quelconque des revendications précédentes, **caractérisé en ce que** l'élément de raccordement (22, 170) est réalisé en métal sous forme de griffes en tôle, dont les crochets (26) formés au niveau d'un fond (24) sont soudés à l'élément de support (16) sous la forme d'au moins un rail à ressort.

7. Dispositif de raccordement (10) selon la revendication 6, **caractérisé en ce que** l'épaisseur de matériau de la nervure de palier (30) dans la région de la goupille de palier (62, 172) est renforcée par pliage de 180 degrés.

8. Balai d'essuie-glace (12) **caractérisé par** un dispositif de raccordement (10) connecté à celui-ci, selon l'une quelconque des revendications précédentes.
